(19) Europäisches Patentamt
European Patent Office
Office européen des brevets

(11) **EP 3 330 695 B1**

(12) **EUROPEAN PATENT SPECIFICATION**

(45) Date of publication and mention
of the grant of the patent:
**09.09.2020 Bulletin 2020/37**

(51) Int Cl.:
***G01N 11/16*** *(2006.01)*

(21) Application number: **16829899.0**

(86) International application number:
**PCT/ES2016/070541**

(22) Date of filing: **19.07.2016**

(87) International publication number:
**WO 2017/017299 (02.02.2017 Gazette 2017/05)**

(54) **MAGNETIC NEEDLE INTERFACIAL SHEAR RHEOMETER AND SYSTEM AND METHOD FOR ACTUATING SAME**

MAGNETISCHES NADELGRENZFLÄCHENSCHERRHEOMETER SOWIE SYSTEM UND VERFAHREN ZUR BETÄTIGUNG DAVON

RHÉOMÈTRE INTERFACIAL À CISAILLEMENT UTILISANT UNE AIGUILLE MAGNÉTIQUE AINSI QUE SYSTÈME ET PROCÉDÉ D'ACTIONNEMENT DE CE RHÉOMÈTRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2015 ES 201531113**

(43) Date of publication of application:
**06.06.2018 Bulletin 2018/23**

(73) Proprietor: **Universidad Nacional de Educación a Distancia**
**28015 Madrid (ES)**

(72) Inventors:
• **RUBIO ÁLVAREZ, Miguel Ángel**
**28040 Madrid (ES)**
• **TAJUELO RODRÍGUEZ, Javier**
**28040 Madrid (ES)**
• **PASTOR RUIZ, Juan Manuel**
**28040 Madrid (ES)**

(74) Representative: **Clarke Modet & Co.**
**C/ Suero de Quiñones 34-36**
**28002 Madrid (ES)**

(56) References cited:
• **J. TAJUELO ET AL: "Magnetic Microwire Probes for the Magnetic Rod Interfacial Stress Rheometer", LANGMUIR, vol. 31, no. 4, 3 February 2015 (2015-02-03), pages 1410-1420, XP055350223, US ISSN: 0743-7463, DOI: 10.1021/la5038316**
• **KRAGEL J ET AL: "Interfacial shear rheology of protein-surfactant layers", ADVANCES IN COLLOID AND INTERFACE SCIENCE, ELSEVIER, NL, vol. 144, no. 1-2, 2 December 2008 (2008-12-02), pages 38-53, XP025586701, ISSN: 0001-8686, DOI: 10.1016/J.CIS.2008.08.010 [retrieved on 2008-08-28]**
• **J. TAJUELO ET AL.: 'Magnetic Microwire Probes for the Magnetic Rod Interfacial Stress Rheometer.' LANGMUIR vol. 31, no. 4, 2015, pages 1410 - 1420, XP055350223**

**Description**

Field of the invention

This invention pertains to the area of magnetic needle interfacial shear rheometers (hereinafter MNISR). These rheometers allow measuring the viscoelastic properties of thin films of materials of technological interest located in a liquid-gas or liquid-liquid interface by means of magnetic needles moved by magnetic fields.

Thin films that separate fluid phases occur in all industrial processes involving or producing colloids, micelles, foams and aerosols, so that knowledge of the mechanical properties of these films has practical implications of great relevance.

Background of the invention

Rheology is the branch of mechanics that studies the properties of materials subjected to stresses that produce deformations and/or flows in these materials. In rheology, the properties of materials are characterized through the relationship between stresses and displacements of material elements.

When the materials studied are arranged in thin layers (less than 1 micron thick) at the interface between two fluids (liquid-liquid or liquid-gas), we speak of interfacial rheology. This branch of rheology is very useful for characterizing the mechanical properties of systems in which the phenomena that occur at the interface dominate their behavior (colloidal systems, microemulsions, foams, etc.).

In interfacial rheology, systems are represented in a two-dimensional space (for example, a horizontal plane) and only shear and/or compression movements at the interface are considered. Compression movements (dilatational rheology) produce motions equivalent to a longitudinal wave in one of the directions of the plane, so that some areas of the film are subjected to expansion stresses and others to compression stresses. On the other hand, the shear motions are equivalent to a transverse wave in one of the directions of the plane. This is the excitation mode in which the MNISR systems work.

The MNISR systems measure the properties of viscosity and elasticity of a material located in an interface. In an ideally elastic solid, the elasticity relates the stress that is exerted on it with the deformation that is recovered when such stress is eliminated. In a material that is a linear viscous fluid, the viscosity relates the stress exerted with the flow of the fluid. However, most of the materials subjected to shear stress present elastic and viscous components in their response. The experimental separation of the elastic and viscous contributions to the deformation of the material is required to obtain the viscoelasticity properties of such material. In interfacial rheology, the objective is to extract the values of the interfacial dynamic moduli (storage modulus -elasticity- and loss modulus -viscosity-) of the material over a wide range of excitation frequencies.

Nowadays, in interfacial needle rheometers the sample to be measured is prepared in an extended but shallow trough that is filled with the fluid that forms the subphase (usually ultrapure water) and the film to be studied is formed on the air-water interface. The magnetic needle is placed on the interface and an oscillatory force is exerted on such needle through an oscillatory magnetic field. This magnetic force transmits a stress (force / length) to the interfacial layer and the subphase fluid that are in contact with the needle. The resulting motion of the needle is affected by the fluid and the interface and allows obtaining the rheological properties of the interface.

A geometrical parameter of the needle that has great importance is its diameter, since the smaller the area of contact of the probe with the subphase, the easier to distinguish the friction generated by the contact line between the film and the probe from the friction generated by the contact surface between the subphase and the probe (Brooks et al, 1999). In addition, probes of smaller diameter have, in general, the advantage of having lower inertia but the disadvantage of needing magnetic fields of greater intensity to induce movement.

There is a commercial MNISR system, manufactured by Biolin-KSV, which uses magnetic needles constituted by a glass capillary filled with a wire of magnetic material, and sealed at both ends. These probes are offered in different versions with diameters not lower than 400 microns. With these needles a maximum resolution of $10^{-6}$ Pa.m.s in interfacial viscosity and $10^{-6}$ N/m in dynamic moduli can be achieved. This commercial device generates the necessary magnetic field by means of a pair of coils through which a proper electric current circulates. The force generated on the needle will be proportional to the intensity that circulates through the coils and to the magnetic dipole moment of the needle, so that the maximum force will depend on the maximum current the coils can stand and the volume of the needle itself.

Recently Tajuelo et al. (Tajuelo et al., 2015) have described the use of needles constituted by magnetic microwires encapsulated in glass, with total diameters between 15 and 25 microns, as probes for MNISR devices. With these needles a maximum resolution better than $10^{-7}$ Pa.m.s in interfacial viscosity and $10^{-7}$ N/m in interfacial dynamic moduli have been achieved. The use of this new type of needle, which significantly improves the sensitivity of the technique, is partially limited in traditional MNISR systems, since its lower magnetic dipole moment makes large field gradients necessary, and those high field gradients are difficult to achieve with traditional coil systems.

It is important to mention that the only procedure for calibration and data processing that is valid for both types of needles (macro and micro-needles) has been described in Tajuelo et al., 2015. This procedure adequately takes into account the low inertia of the micro-needles and the spatial structure of the hydrodynamic velocity field both at the interface and in the subphase.

Actually, each probe unavoidable requires a specific calibration prior to each measurement, since the response depends on the magnetic and geometric characteristics of the needle, as well as on the configuration of the magnetic field of the system and the capillary properties (surface tension, contact angle) of the fluids that determine the interface in which the needle is located.

Therefore, MNISR systems work in two successive stages:

i) Calibration of the needle response at the "clean" interface (without film) between the two fluids.

ii) Measurements with the film already formed in the interface and subsequent processing of the obtained data, in which the values of the parameters obtained in the needle calibration stage are used.

More in detail, the calibration procedure for magnetic needles of MNISR systems comprises the following steps:

1. Performing measurements of the displacement of the magnetic probe at a clean air-water interface (without interfacial film) in a frequency range $\omega$, preferably selected between 0.01 and 100 s$^{-1}$.
2. Obtaining, from these measurements, the amplitude ratio and the lag between the force applied to the needle and its displacement.
3. Adjustment of the data so obtained to a convenient theoretical model. In the case of traditional MNISR systems, the model currently used (Tajuelo et al. 2015) is based on the application of Newton's second law to a system consisting of an external oscillatory forcing, a positioning harmonic well of elastic constant $k_{pos}$ and a friction term due to the subphase, calculated through the gradient of the velocity field in the layer of fluid in contact with the needle.

Regarding the measurement procedure for the film to be characterized and the data processing, the most current method is based on the numerical/analytical resolution of the fluid velocity field for air-water interfaces (Reynaert et al., Journal of Rheology, 2008), adapted for the calculation of the dynamic moduli of the films (Verwijlen et al., 2011). This procedure allows obtaining the correct value of the Boussinesq number, Bo, which is an important parameter in the measurements since it represents the relationship between the resistances to the movement of the needle exerted by the interfacial film and the subphase, respectively. Therefore, the higher the value of Bo, the more precise and reliable the measurement is.

The stages of this data processing method are ordered as follows:

1. Measurements with an interfacial film in a wide range of frequency, $\omega$ (typically between 0.01 and 100 s$^{-1}$).
2. Selection of an initial value for the constant Bo.
3. Numerical resolution of the velocity field equations in the subphase and the interfacial film in the formulation described in Verwijlen et al., 2011, (equations 21 to 24) for the configuration corresponding to the experiments of stage 1.
4. Correction of the value of Bo by means of the quotient between the experimentally obtained value of the amplitude response and that obtained in stage 3 (Verwijlen et al., 2011, equations 25 to 27).
5. Iterative repetition of stages 3 and 4 until convergence in the value of Bo.
6. Use of the converged Bo value to obtain the dynamic moduli according to the expressions given in Verwijlen et al. (2011).

At the current point of development of the MNISR systems, it is interesting to look for improvements in an aspect related to the ease/comfort of using the MNISR systems as systems of routine laboratory use (user experience satisfaction) and in two aspects related to the useful range of measurement of these systems:

• Improvement of the user experience satisfaction. One of the major problems with the current MNISR systems, in terms of ease of use, is the placement of the needle at a well-defined initial position (both in terms of the position of the center of mass of the needle and in terms of its initial orientation with respect to the axis of the coils that create the magnetic field gradient). This problem is combined with the need to prevent, during the measurements, the needle from escaping from the field of view of the camera that records its motion.
In order for the needle oscillation to have a well-defined initial position, it is necessary to generate a small magnetic potential well, so that the point of lowest potential (equilibrium point) is the initial position of the needle and such that by suppressing the oscillating field gradient the needle will return to that initial point. In most MNISR systems, this potential well is generated by a pair of coils in the Helmholtz configuration (Brooks et al., Reynaert et al., Verwijlen et al). This type of systems create, in general, a potential well of small depth compared to its width, so that the initial position of the needle is ill-defined and the needle position is very sensitive to external disturbances (weak air currents, surface temperature gradients, convection at the subphase, etc.). This makes that getting a good initial positioning of the needle is a rather painful routine and the needle often escapes the potential well during the measurements.

In the system described in Tajuelo et al, (2015) the equilibrium position is fixed by means of a permanent magnet placed on the upper cover of the trough containing the subphase and the interface, with the magnet axis oriented normally to the interface in which the needle is located. This system (Tajuelo et al.) creates a potential with a deeper well which avoids the needle escaping from the field of view during measurements and slightly improving the ease of initial positioning of the needle, regarding the position of the needle tip located close to the permanent magnet. However, the control of the initial orientation of the needle remains complicated.

It is important to note that the existence of the potential well created by means of, either, Helmholtz coils or the permanent magnet have undesirable effects on the resolution of the MNISR systems at low oscillation frequency (Tajuelo et al., 2015), as will be explained in the following.

- Increase of the resolution in the measurements for films with low values of the dynamic moduli. The resolution of the MNISR devices at low frequency is mainly limited by the potential well that is required for the initial positioning of the needle and that tends to keep the movement of the needle within the field of view of the camera.

Actually, the introduction of the above mentioned potential well introduces in the deformation/force amplitude ratio, $AR(\omega)$, a term corresponding to the recovery constant of the potential well $k_{pos}$. Since the term due to the resistance of the film is proportional to the frequency of oscillation, there is always a regime in which the term due to the resistance of the film becomes much smaller than $k_{pos}$ at low frequency and, therefore, measurements at lower frequencies are no longer significant. Therefore, a direct way to improve the resolution of the MNISR devices is, ideally, to eliminate (or, at least, strongly decrease) the contribution of the potential well in the force balance equation on the needle; i.e., to decrease or cancel the value of $k_{pos}$.

It is interesting to improve this measurement threshold because the lack of resolution in the measurement of the mechanical properties of the films with low interfacial viscosity prevents the study of diluted films (low number of molecules per unit area), whose mechanical properties are of great interest. For example, in the cosmetic industry this limitation in resolution prevents studying how much the surface concentration in the film (i.e., the amount of surfactant molecules) can be decreased while maintaining the desired properties of the coating, which may have obvious repercussions in both economic and environmental aspects.

- Increase of the magnetic force on the needle. The force induced by means of the coils is limited due to the need to use large coils but without any polar piece, since the space in between the coils is occupied by the vessel in which the fluids and the interface are located.

It is interesting to increase the intensity of the forces that can be applied to the needle since this would allow measurements in interfacial systems of higher viscosity and elasticity such as films of molecules of biomedical interest (proteins, etc.) or water-surfactant-oil systems, which are of great interest both in the field of oil extraction (secondary and tertiary recoveries) or in relation to the control of oil spills in a marine or fluvial environment.

Bibliographic references

BROOKS, CT et al., An Interfacial Stress Rheometer to Study Transitions in Monolayers at the Air-Water Interface. Langmuir, Vol. 15, No. 7, March 11, 1999, pages 2450-2459.

REYNAERT, S et al. Analysis of the Magnetic Rod Interfacial Stress Rheometer. Journal of Rheology, Vol. 52, No. 1, 2008, pages 261-285.

VERWIJLEN, T et al. Study of the Flow Field in the Magnetic Rod Interfacial Stress Rheometer. Langmuir, Vol. 27, No. 15, June 22, 2011, pages 9345-9358.

TAJUELO, J et al. Magnetic microwire probes for the magnetic rod interfacial stress rheometer. Langmuir, Vol. 31, No. 4, December 15, 2014, pages 1410-1420.

KRAGEL J et al., Interfacial Shear Rheology of Protein-surfactant Layers. Advances in colloid and interface science, Vol. 144, No. 1-2, December 2008, pages 38-53.

Description of the invention

The invention is set out in the appended claims. The invention corresponds to a new MNISR system in which the mechanism for applying the magnetic force on the needle is not based on magnetic coils but on the precise displacement of a system comprising two permanent magnets of small dimensions. The magnets are placed in a horizontal plane at a well-defined and controllable height above the interface in which the film is located, their magnetization axes are perpendicular to the interface and the platform on which the magnets are attached is displaced in an oscillatory way the direction parallel to the axis of the needle. The pair of magnets creates a harmonic potential well that we can characterize by an elastic constant that we will call $k_i$. The movement of the platform holding the magnets causes the potential well minimum to describe an oscillatory motion in the direction parallel to the axis of the needle, imposing a sinusoidal force on it.

A first aspect of the present invention relates to a system for driving the needle of an interfacial rheometer with a magnetic needle, according to claim 1. Such drive system comprises two permanent magnets with magnetization axes perpendicular to the plane of the interface in which the magnetic needle of the rheometer is located. The magnets are located at the same distance from that plane and with their polarities inverted one with respect to the other. The drive system also comprises drive means configured to move the magnets in a longitudinal direction parallel to the plane of the interface, keeping the distance between the magnets constant. The displacement is preferably carried out in an oscillatory manner, at a frequency $\omega$.

The drive system preferably comprises supporting means to keep the magnets at a distance from the plane of the interface and to transmit the longitudinal movement from the driving system to the magnet supporting platform. In a preferred embodiment, the supporting means comprise a plate with an intermediate slot between both magnets to allow grabbing the movement of the magnetic needle by the rheometer camera. In another possible embodiment, the supporting means comprise a plate of transparent material. The support means can also be implemented as an independent support for each magnet.

The drive means may comprise a motor with linear encoder to determine the longitudinal position of the magnets at any time. The driving means are configured to displace the magnets, or the support-magnets assembly, in the longitudinal direction of the rheometer channel.

The drive system may comprise a system for positioning the magnets in the longitudinal direction parallel to the plane of the interface configured to modify the distance between the magnets. This positioning system is a system of horizontal displacement capable of moving the magnets away from each other, by moving relative to one another in the longitudinal direction parallel to the plane of the interface. This horizontal positioning system can be implemented in different ways, for example by means of an independent motor and linear encoder for each magnet. In a preferred embodiment, the drive means itself can also be used as a horizontal positioning system. That is, the drive means can be used initially to establish the distance between the magnets. Subsequently, the driving means would be used to oscillatory displace in an oscillatory way both magnets at a frequency $\omega$ in the longitudinal direction parallel to the plane of the interface, keeping the distance between the magnets constant.

The drive system may also comprise a system for positioning the magnets in the direction perpendicular to the plane of the interface, configured to modify the distance of the magnets to that plane. This positioning system is a vertical displacement system capable of moving the magnets away, or the magnets plus the magnet supporting system, or the magnets plus the magnet supporting system plus the magnet longitudinal positioning system with respect to the plane of the interface. This vertical positioning system can be implemented in different ways, for example by means of a motor and linear encoder. The drive system comprises a control unit responsible for controlling the drive means.

A second aspect of the present invention relates to a magnetic needle interfacial shear rheometer comprising a trough in which the subphase is located, a camera for capturing the movement of the magnetic needle and a channel within which the needle movement occurs. Additionally, the rheometer comprises the needle drive system according to any of claims 1 to 4.

The rheometer comprises a control unit responsible for controlling 1 the driving means of the needle drive system. The control unit is preferably configured to:

- Control the camera.
- Activate the actuating means to move the two magnets oscillatory at a frequency $\omega$ in the longitudinal direction of the channel.
- Obtain the position of the magnets from the information of the driving means.
- Obtain the position of the magnetic needle from the images captured by the camera.
- Obtain the phase shift and the amplitude ratio between the position of the magnets and the position of the magnetic needle.
- Obtain, in a previous calibration procedure, the elastic constant of the potential well created by the magnets on the magnetic needle.
- Calculate, using the elastic constant and the phase shift and amplitude ratio, the dynamic moduli and the complex interfacial viscosity of the film for the frequency $\omega$.

The control unit is preferably configured to perform frequency ($\omega$) sweeps within a frequency range and obtain the dynamic moduli and the complex interfacial viscosity of the film for such frequency range.

The rheometer may further comprise a transparent bottom window, made in the base of the trough, and a light source for illuminating the magnetic needle through the bottom window. The rheometer may comprise movable barriers to control the spatial extent of the film within the trough.

A third aspect of the present invention relates to a method of driving the needle of a magnetic needle interfacial shear rheometer, according to claim 12. The driving method comprises moving, in the longitudinal direction of the rheometer channel parallel to the plane of the interface in which the magnetic needle of the rheometer is located, two permanent magnets with magnetization axes perpendicular to that plane, the magnets being located at the same distance from the interface plane and with their polarities inverted one with respect to the other. The displacement is preferably carried out in an oscillatory manner, at a frequency $\omega$.

A fourth aspect of the present invention relates to a method of measuring the viscosity of a film using an interfacial rheometer with a magnetic needle, according to any of claims 12 to 13. The method of measuring viscosity comprises using the above-described driving method.

The method of measuring the viscosity comprises:

- moving the two magnets in an oscillatory way at a frequency $\omega$ in the longitudinal direction of the channel;
- obtaining the position of the magnets;
- obtaining the position of the magnetic needle;
- obtaining the phase shift and the amplitude ratio between the position of the magnets and the position of the magnetic needle;
- obtaining, in a previous calibration procedure, the elastic constant $k_i$, of the potential well created by the magnets on the magnetic needle;
- calculating the dynamic moduli and the complex interfacial viscosity of the film for the frequency $\omega$, using the elastic constant and the phase shift and amplitude ratio.

The method for measuring viscosity may comprise performing frequency sweeps $\omega$ within a frequency range and obtaining the dynamic moduli and the complex interfacial viscosity of the film for that frequency range.

In this system, both the separation between the magnets and the distance between the magnets and the interface can be adjusted so that the constant is at all times the most suitable for the experiment one wants to perform. In addition, it allows for a precise initial positioning both positional (precise control of the position of the center of mass of the needle) and orientational (precise control of the orientation of the needle), since the pair of magnets creates a torque that tends to maintain the magnetic needle in the direction parallel to the axis that joins the center of the magnets. Since the force generated by the oscillation of the needle is due to the movement of the potential well itself, there is no possibility of the needle escaping from the potential well because of large displacements that destroy the film to be measured. This feature also makes the needle always stay within the range of vision of the camera that records the movement of the needle. The system is useful both for the movement of commercial needles (type ISR42 of Biolin-KSV) and for micro-needles.

In this new system there is no potential well that remains static to fix the equilibrium position of the needle, that is, the theoretical equivalent value of $k_{pos}$ is zero, so that the limitations of resolution at low frequency due to the finite value of $k_{pos}$ that were present in the Helmholtz coils driven systems are directly eliminated. The only source of limitation of the resolution of the system is the Boussinesq number, i.e., the relative importance between the resistance opposed by the film and the resistance due to the subphase.

In addition, the intensity of the magnetic force applied by the magnets on the needle is much greater than the one that can be generated in systems that work on the basis of the field created by coils. In the calculations made for a particular configuration (separation between magnets of 3 cm and interface height-magnets of 1 cm) and a commercial probe (ISR42, BiolinKSV) forces up to 500 $\mu$N are obtained, considerably higher than the 30 $\mu$N reported for the original design of coils system (Brooks et al, 1999). Another typical drawback of traditional MNISR systems is that during the formation of the thin film to be measured it can happen that a pronounced increase in surface pressure (decrease in surface tension) causes the needle to sink into the subphase. In the new MNISR system, in addition to the elastic force and the aforementioned torque, the pair of magnets generates a vertical force in the positive direction (upwards) on the needle. Consequently, the risk of the needle sinking in the subphase by the reduction of the surface tension is minimized.

Brief description of the drawings

Next, we briefly describe a series of drawings that help to better understand the invention.

Figure 1A shows a film being deformed by a magnetic needle. Figure 1B represents a vertical section of Figure 1A.

Figure 2 represents a scheme of a traditional MNISR equipment, i.e., of a magnetic needle interfacial shear rheometer in which the force on the needle is generated by means of a system of two coils, according to the state of the art. Figure 2 does not form part of the invention.

Figure 3 shows a diagram of the new MNISR equipment in which the force on the needle is generated by means of a system of two permanent magnets of small size that perform an oscillatory motion in the longitudinal direction of the needle.

Figure 4 shows the result of the numerical calculation of the magnetic field created by a cylindrical magnet and the reference system used.

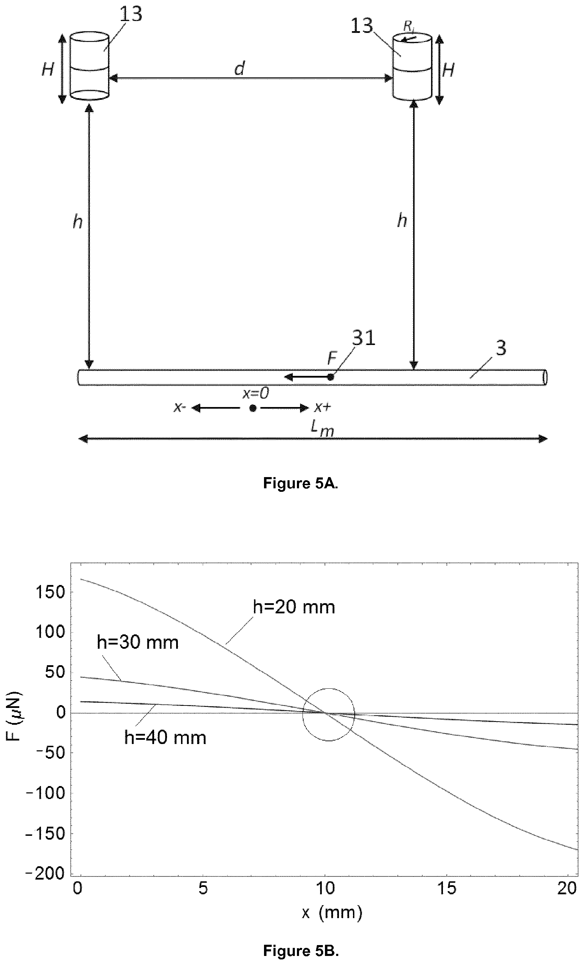

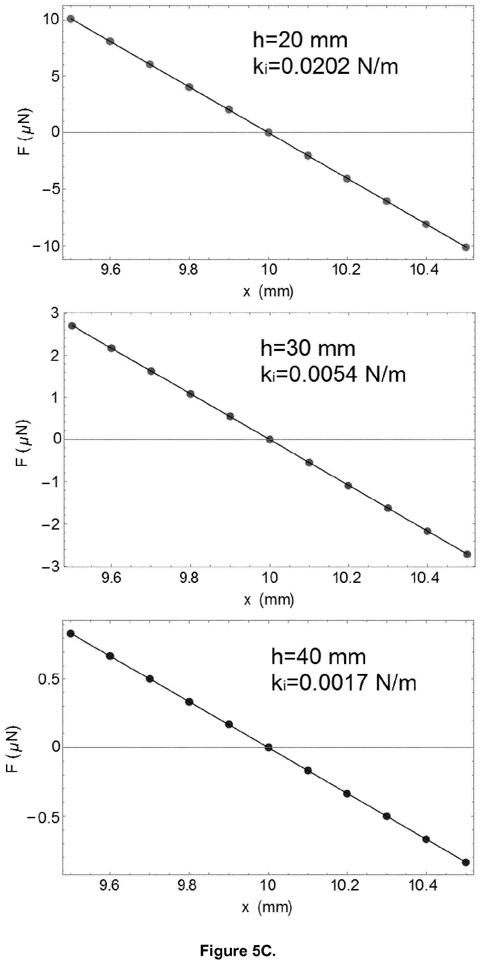

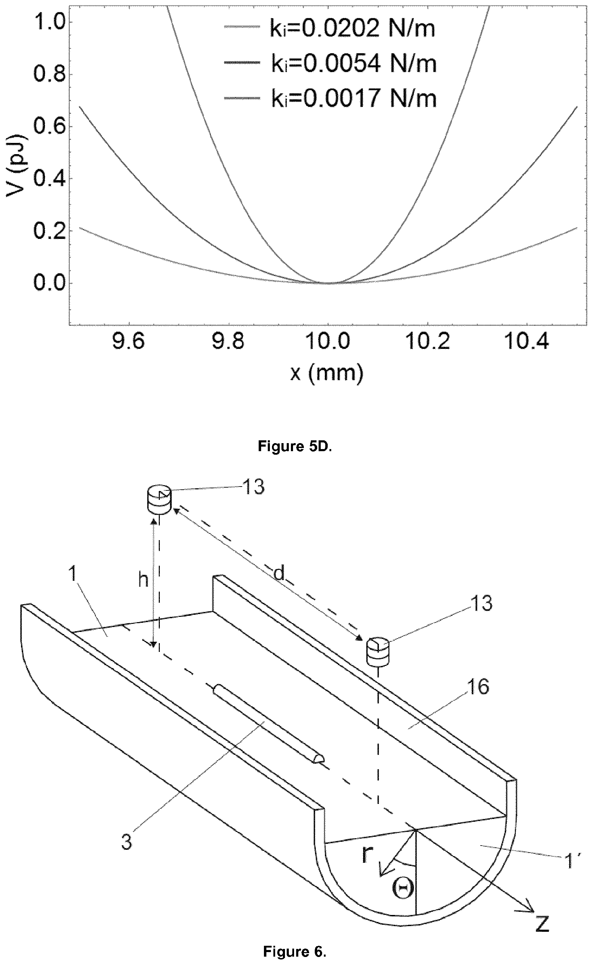

Figure 5A schematically shows the physical arrangement of the magnets 13 and the needle 3 when the needle is displaced with respect to the equilibrium point. Figure 5B shows the graph of the theoretical value of the force exerted by the magnets on an ISR-42 needle as a function of the displacement of the needle with respect to the point of equilibrium for different heights, $h$, of the magnets above the needle. In Figure 5C the same graphs as in Figure 5B are shown but restricted to a small range centered at the equilibrium point, together with the linear fit for each of the heights $h$. Figure 5D shows the resulting potential well for each of the heights $h$.

Figure 6 shows the channel model, the needle and the pair of magnets, together with the reference system that is used in the formulation of the Navier-Stokes equation and in the theoretical expressions corresponding to the amplitude ratio and the phase shift.

Figure 7 shows the data for the displacements of the magnets and an ISR42 needle collected as a function of time during a calibration procedure for $\omega = 6.28$ s$^{-1}$, $h = 40$ mm.

Figures 8A and 8B show, respectively, the experimental values (points) and the calibration curves (continuous curves) corresponding to the amplitude ratio and the phase difference between the displacements of the magnets and the commercial needle ISR-42, for several values of the distance between the magnets and the needle, $h$.

Figure 9 shows the values of $k_i$ calculated by means of the calibration procedure described for the new MNISR system, as well as the curve obtained by the numerical calculation of the magnetic field created by the magnet pair.

Figures 10A and 10B show, respectively, the experimental values (points) and the theoretical curve for a null value of $k_{pos}$ (continuous curve) corresponding to the amplitude ratio and the phase difference between the instantaneous force exerted by the magnets and the displacement of the commercial needle ISR-42, for several values of the distance between the magnets and the needle, $h$.

Figure 11A represents the amplitude ratio in the force-position representation measured on a clean water-air interface with a traditional MNISR system and with the new MNISR system of the present invention (the continuous curves represent the best fits resulting from the respective calibrations). Figure 11B shows experimental data equivalent to those of Figure 11A but this time measured in a thin film of silicone oil with the traditional MNISR system and with the new MNISR system.

Figure 12 shows the results for the loss modulus and the complex viscosity obtained on a thin film of silicone oil using the new MNISR system and the data processing method described herein.

Detailed description of the invention

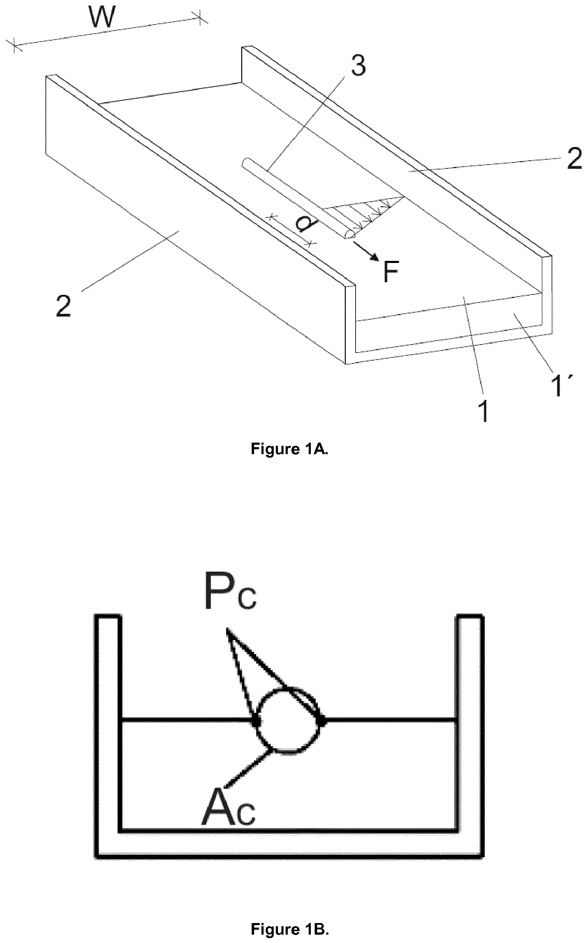

The magnetic needle interfacial shear rheometers (MNISR) allow to measure the viscoelastic properties of very thin layers (with thicknesses between nanometers and microns) of a material by means of a magnetic needle 3 moved by magnetic fields. In **Figure 1A** a typical system is illustrated, comprising a film 1 formed at the interface between two fluids and confined in one of its lateral directions between two flat walls 2 which remain at rest and form a channel of width W. There is a magnetic needle 3 resting on the interface in which the film 1 is formed and aligned along the axis of the channel. If a force F is exerted on the magnetic needle 3 in the direction of the axis of the channel, the needle moves longitudinally. In its displacement, it transmits a mechanical stress to the region of the film that is in contact with it, causing its deformation. If the displacement of the needle is d, the mechanical deformation of the surface will then be:

$$\gamma = \frac{d}{W/2}.$$

If the stress $\sigma$ exerted by the magnetic needle 3 on the film 1 is periodic in time, $\sigma = \sigma_0\cos(\omega t)$, the deformation $\gamma$ obtained by measuring the position of the needle as a function of time will be periodic too with a certain amplitude, the same frequency of oscillation and a certain phase shift, $\gamma=\gamma_0\cos(\omega t-\delta)$. The dynamic modulus G is defined as the relation between stress $\sigma$ and deformation $\gamma$ and, in general, it depends on the frequency at which the measurement is made, that is, G is a function of $\omega$. Using the complex exponential form, $G(\omega)$ can be written as:

$$G(\omega) = \frac{\sigma}{\gamma} = \frac{\sigma_0 \cos(\omega t)}{\gamma_0 \cos(\omega t - \delta(\omega))} = \frac{\sigma_0 e^{i\omega t}}{\gamma_0 e^{j(\omega t - \delta(\omega))}} = \frac{\sigma_0}{\gamma_0} e^{i\delta(\omega)}$$

Since it is a complex number, it is also called the complex modulus G*. It is therefore possible to separate its real and imaginary parts:

$$G*(\omega) = G'(\omega) + iG''(\omega)$$

If the film shows viscoelastic behavior, the stress and the deformation are proportional in the elastic contribution, whereas the stress is proportional to the deformation rate in the viscous contribution. Taking into account that position and speed are 90° out of phase in an oscillating motion, it is concluded that the real part of the complex module is due to the elasticity of the film, while the imaginary part is due to the viscous component, so that we can identify:

- G': Elastic or storage modulus (in coherence with the idea of elasticity as energy storage).
- G": Viscous or loss modulus (in coherence with the idea of viscosity as energy dissipation).

It can be concluded that the relationship between the elastic modulus G' and the viscous modulus G" is determined by the phase lag angle $\delta$ between stress and deformation:

$$\frac{G''(\omega)}{G'(\omega)} = \tan\delta(\omega)$$

In this way, if:

$$\delta(\omega) = 0° \rightarrow \tan\delta(\omega) = 0 \rightarrow G''= 0 \rightarrow \text{Purely elastic film.}$$

$$\delta(\omega) = 90° \rightarrow \tan\delta(\omega) = \infty \rightarrow G'= 0 \rightarrow \text{Purely viscous film.}$$

Measuring the relationship between stress and deformation $|G*|$ is determined and by measuring the phase difference $\delta$ between stress and deformation, the relationship between the elastic and viscous part of G* is determined.
**Figure 1B** shows a vertical section of Figure 1 A. The geometrical characteristics of the magnetic needle 3 have a critical influence on its behavior, especially as regards the relationship between the resistance to movement experienced by the needle due to the film 1 and the one that suffers due to the subphase 1' (typically water). Actually, it can be considered that the resistance suffered by the magnetic needle 3 is due to two terms:

- On the one hand, the one caused by the film 1, that occurs along the perimeter $P_c$ (waterline) of the magnetic needle 3.
- On the other hand, the drag due to the subphase 1' of water, that occurs along the entire surface $A_c$ of contact between the subphase 1' and the magnetic needle 3.

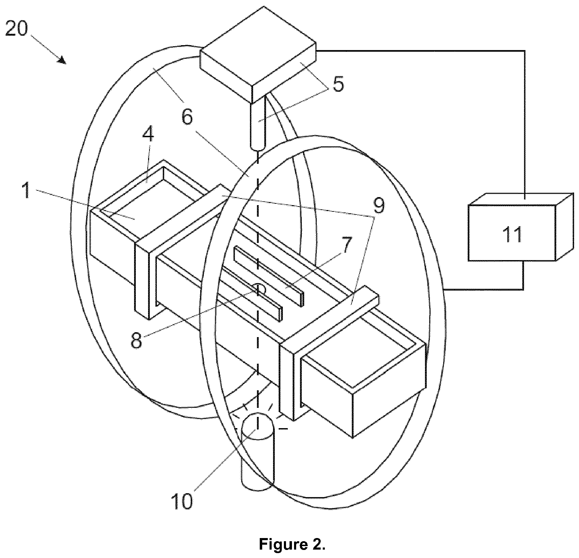

The most usual way to induce a periodic longitudinal movement in the magnetic needle 3 is by means of a magnetic field, as is done in traditional MNISR systems operated by Helmholtz coils, as shown in **Figure 2.** The arrangement of Figure 2 does not form part of the invention. The main elements of a traditional magnetic needle interfacial shear rheometer, driven by coils, are the following:

- Langmuir trough 4, usually manufactured in Teflon or Delrin, and filled with the water subphase 1' on which the films 1 to be studied are generated.
- Camera 5, preferably a CCD camera, for the video capture of the movement of the magnetic needle 3 (the needle is not shown in the figure).
- Coils 6 for the generation of the oscillating magnetic field gradient that governs the movement of the magnetic needle 3.
- Channel 7, formed by two sheets of glass, or other material (Teflon, Delrin, etc.), inside which the movement of the magnetic needle 3 occurs.
- Glass or quartz bottom window 8 through which the magnetic needle 3 is illuminated.
- Movable barriers 9, usually made of Teflon or Delrin, to control the spatial extent of the film 1, that, therefore, allow to vary the surface concentration of the film 1.
- Light source 10 to illuminate the magnetic needle 3 through the bottom window.

The channel 7 (described schematically in Figures 1A and 1B) is placed in the center of the trough 4, and is formed by two parallel glass plates, spaced a distance W typically of about 2 cm, and with a length much greater than the length of the needle. The needle is composed of a magnetic core inside a glass capillary; for example, needle ISR 42 has a total length L=4.2 cm and mass m=17.4 mg. In the center of the channel 7, the base of the trough 4 has the circular glass window 8, of about 2 cm in diameter, along whose vertical axis the light source 10, in the lower part, and the camera 5 connected to a zoom lens, in the upper part, are placed. This makes it possible to detect the position of one of the ends of the magnetic needle 3 at any time.

The thin films 1 that we wish to investigate are created on fluid-fluid interfaces (usually water-air) in the Langmuir trough 4. In a typical experiment with a film at a water-air interface, we begin by filling the trough 4 with the fluid that makes up the subphase (typically water). Next, the magnetic needle 3 is placed at the water-air interface, being kept afloat by capillary forces, and the measurements required to calibrate the mechanical resistance exerted by subphase 1' are conducted. The film 1 is then generated by spreading a solution of the material that will form the monolayer in a highly volatile solvent. When the solvent evaporates, the film of the material will be formed on the water-air interface.

The measurements are made by means of the longitudinal oscillatory movement of the needle that is controlled by the action of an external magnetic field. For this, the axis of the channel 7 is made to coincide with the axis of two coils 6 arranged symmetrically with respect to the center of the trough 4. These two coils are arranged in an anti-Helmholtz configuration, i.e., spaced a distance equal to their radius, and with the same intensity current flowing through them but in opposite senses. The coils 6 are connected to the output of a current amplifier. The arrangement with coils does not form part of the invention. The input that governs the amplifier is connected to a digital function generator. Finally, a control unit 11 (for example, a computer) processes the images taken by the camera 5 to obtain the position of the end of the magnetic needle 3 in each image.

In this way it is possible to have precise values at any time of the oscillations of the position of the magnetic needle 3 and of the current applied to the coils 6, which is the factor that determines the force exerted on the needle and, therefore, the mechanical stress exerted on the film.

From the relative phase and the amplitude ratio of the current produced by the magnetic field gradient and the position of the needle, the complex dynamic modulus G* can be obtained precisely, with its elastic G' and viscous G" components. From the dynamic modulus G*, the complex viscosity of the films can be obtained.

To minimize the sensitivity of the system to impurities that are deposited in the water-air interface, usually a box formed by plates of methacrylate that surrounds the trough 4 and isolates it from the outside. In addition, in this way the interface is protected from air currents that could generate flows that distort the measurement.

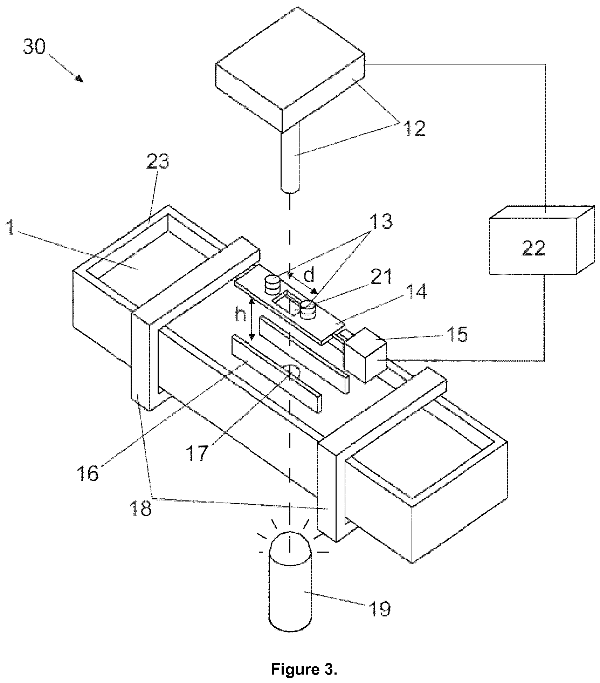

The present invention corresponds to a new magnetic needle interfacial shear rheometer driven by magnets with magnetization axis perpendicular to the plane in which the needle moves. **Figure 3** shows a schematic of the new magnetic needle interfacial shear rheometer 30 of the present invention, in which the movement of the needle is induced through the displacement of two small permanent magnets 13 positioned so as to maintain the magnetic needle 3 at a point of stable equilibrium between them and with a perfectly defined orientation. As seen in Figure 3, the scheme is very similar to that of Figure 2 by replacing the pair of coils 6 with a platform 14, for example a plate, in which the two magnets 13 are fixed with their polarities inverted one with respect to the other. The platform 14 is linked to an electromechanical system, driving means 15, with motor and linear encoder that allows moving it in the longitudinal direction of the channel 16 and knowing its position at any time. Although not shown in Figure 3, the rheometer 30 can also have another positioning system that moves the plate in the vertical direction and that allows controlling the height h of the plate and the magnets measured from the interface, which is a very important parameter in this system. Such positioning system in the vertical direction can be implemented in different ways, for instance in a similar way to the horizontal displacement of the platform 14, preferably using an electromechanical system (for example by means of a motor with linear encoder). Finally, the system is connected to a control unit 22, for example a computer, which controls the movement of the motor 15 and receives and processes the encoder signal from the platform 14 and the images taken by the camera 12. The main elements are, then:

- Langmuir trough 23, made of teflon or delrin, where the water subphase 1' of water is placed and on which one generates the films 1 to be studied.
- Camera 12, preferably of CCD type, for the video capture of the magnetic needle 3 motion.
- Platform 14 with permanent magnets 13, for generating the magnetic force acting on the needle and causing an oscillatory longitudinal movement, with a horizontal distance d separating the magnets and a vertical distance *h* between the magnets 13 and the needle 3. The support 14 has to allow the camera 12 to capture images of the needle 3, so that it can have a shape that does not obstruct the camera 12 vision of the needle 3 (for example, two clamps for supporting the attached magnets by a longitudinal arm external to the view of the camera 12), or it can have an opening 21 made in its central part between the two magnets 13 (as in the example shown in Figure 3), or it can be manufactured in some transparent rigid material (glass, PMMA, polycarbonate, etc.). Although in this embodiment a plate is proposed as a platform, other types and forms of support could be contemplated in other alternative embodiments. One could also consider an independent support for each magnet, each support driven by means of an independent driver so that the distance d between the magnets 13 can be modified as desired and subsequently make a synchronous movement of the same, keeping constant the distance d, once it has been set, at all times during the operation of the rheometer to obtain the viscosity.
- Electromechanical system 15, composed of motor and linear encoder, connected to the platform 14 and allowing one to move it in the direction of channel 16.
- Channel 16, formed by two sheets of glass, or other material (Teflon, Delrin, etc.), inside which the movement of the magnetic needle 3 occurs.
- Transparent bottom window 17 of glass or quartz through which the magnetic needle 3 is illuminated.
- Teflon or delrin movable barriers 18 to control the spatial extent of the film, therefore, allowing one to vary the surface concentration of the film 1.
- Light source 19 to illuminate the needle through the lower window.

In contrast to the operation of a traditional MNISR device, in the rheometer of the present invention there are no two external forces acting on the magnetic needle (force exerted by the coils and static potential well), but only one (dynamic potential well). The force generated on the magnetic needle 3 imposing its oscillatory displacement now comes from a potential well whose minimum oscillates in the longitudinal direction of the device.

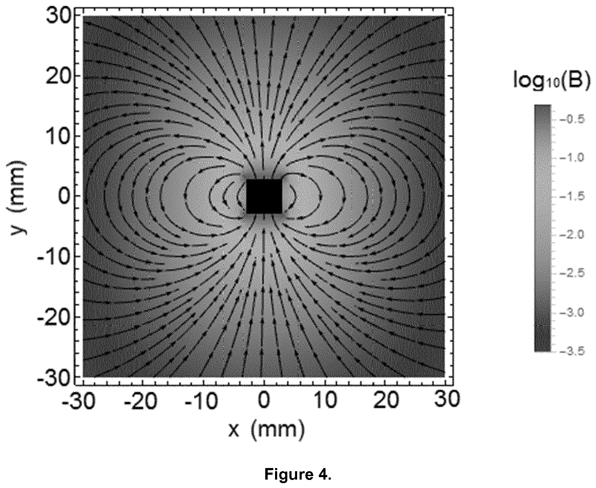

The force exerted by the pair of magnets 13 on a magnetic needle can be numerically calculated by using standard methods of electromagnetism. In order to do this, first, the magnetic field generated by a permanent magnet of the appropriate dimensions and magnetization is numerically calculated (see **Figure 4).** Subsequently, the force exerted by the combined field of the pair of magnets 13 is calculated on a needle whose magnetic core has the dimensions and magnetic moment per unit of length corresponding to the probe used.

As an example, **Figure 5B** shows the longitudinal force F created by a pair of magnets 13 on a magnetic needle 3 (of type ISR-42) as a function of the *x* displacement of the needle with respect to the equilibrium point (x=0, centered situation with respect to the magnets) for different magnets-needle vertical distances *h* (20mm, 30mm and 40mm). The physical arrangement of the magnets 13 and the needle 3 is shown schematically in **Figure 5A.** In this case the characteristics of the magnets 13 are magnetization $M = 7 \times 10^5$ A/m, radius $R_i$ = 3.2 mm, height $H$ = 6.3 mm and separation between magnets $d$ = 2 cm, while those of the magnetic core of the needle 3 are length $L_m$ = 30 mm and magnetic moment per unit length $m_x$ = 0.047 A·m. The distance between magnets $d$ may be greater or less than the length of the needle $L_m$ as appropriate, depending on the needle and the magnetization of the magnets (in the particular case of Figure 5A the length of the needle $L_m$ is greater than the distance between magnets d). The elastic force F exerted by the magnets 13 on the needle 3 when the center of mass 31 of the needle moves longitudinally with respect to the equilibrium point (x=0) is a restoring force, in the opposite direction to the displacement, as shown in Figure 5A, where the needle 3 appears displaced to the right of the equilibrium point (in x+) and the resultant restoring force F in the opposite direction, applied in the center of mass 31 of the needle, tends to pull the needle 3 to the left, towards its equilibrium point (x=0).

In **Figure 5C** the same graphs as in Figure 4A are shown but restricted to a small interval of 1 mm centered at the equilibrium point (x=0), together with the linear adjustment for each of the heights *h*. As seen in Figure 5C, in the vicinity of the equilibrium point or midpoint between the magnets (x=0), the total force is well represented by an elastic force, proportional to the distance. Taking into account that the typical oscillation amplitudes are less than 500 microns, it is perfectly justified to represent the force exerted on the needle by an expression of the form:

$$F(x) = -k_i x,$$

where $k_i$ is the slope of the linear fit of Figure 5C. **Figure 5D** shows the potential well as a function of the distance to the minimum for the three configurations corresponding to Figure 5C.

Next, we explain the theoretical model of the new MNISR system proposed in the present invention. Taking into account the reference system indicated in **Figure 6**, the z-coordinate of the mid-point between the pair of magnets 13 at each instant of time is labeled as $z_i(t)$. When the motor 15 that moves the magnets 13 (specifically, moves the support 14 of the magnets, not shown in Figure 6) performs an oscillation of frequency $\omega$ and amplitude $A_i$, the position of the midpoint between the magnets in the reference system of the laboratory will be, using the complex exponent:

$$z_i(t) = A_i e^{i\omega t}$$

We now consider the z coordinate of the center of the magnetic needle 3, which will be labeled as $z_a(t)$. When the potential well generated by the magnets begins to oscillate, the needle will describe an oscillatory movement of the same frequency, of amplitude $A_a$ and generally with a phase lag of a certain angle $\delta_{pp}$ with respect to the oscillation of the magnets, where the subscript $pp$ indicates that we refer to the phase shift between two positions, that of the magnets and that of the magnetic needle. Therefore, the equation describing the oscillation performed by the magnetic needle 3 is:

$$z_a(t) = A_a e^{i(\omega t - \delta_{pp})} = A_a e^{-i\delta_{pp}} e^{i\omega t} = A_a^* e^{i\omega t}$$

where we have defined the complex magnitude $A_a^*$ as the product $A_a e^{-i\delta_{pp}}$. During the motion of the potential well and the magnetic needle 3, the center of mass 31 of the magnetic core is always close to the minimum of the well, and, in those conditions, the potential of the well can always be represented as a parabola, as shown in Figure 5D. Therefore, at any time, the well will exert on the needle 3 a magnetic force that will be proportional to the distance between the center of the potential well, which is $z_i$, and the position of the center of the needle $z_a$:

$$F(t) = -k_i(z_a(t) - z_i(t))$$

where $k_i$ is the elastic constant of the potential well created by the magnets 13 on the magnetic needle 3. Assuming that the subphase 1' is formed by water, and that the water-air interface is clean (without any thin film 1) as happens during the calibration of the apparatus, the needle will suffer a friction due to the viscosity of subphase 1'. Following the procedure described by Verwijlen et al (2011), such friction can be calculated numerically assuming a contact angle of 90° and a flat interface. The procedure is based on the calculation of the velocity profile in channel 16 from the Navier-Stokes equation. Considering the reference system of Figure 6, the Navier-Stokes equation takes the form

$$\frac{\partial^2 g}{\partial p^2} + \frac{\partial^2 g}{\partial \theta^2} = i\,Re\,e^{2p} g$$

where $Re$ is the Reynolds number, a the radius of the needle, $p = \ln(r/a)$, and $g$ is a complex function that relates the displacement of each fluid element with the displacement of the needle:

$$z(r,\theta) = g(r,\theta) z_a$$

This equation can be solved numerically (by means of finite differences, for example) with the appropriate boundary conditions:

$$p = 0 \rightarrow g = 1$$

$$p = \ln(R/a) \rightarrow g = 0$$

$$\theta = 0 \rightarrow \frac{\partial g}{\partial \theta} = 0$$

$$\theta = \frac{\pi}{2} \rightarrow Bo\, e^{-p}\left(\frac{\partial^2 g}{\partial p^2} - \frac{\partial g}{\partial p}\right) - \frac{\partial g}{\partial \theta} = 0$$

Once the velocity profile in the channel 16 is known, the friction is calculated from the velocity gradient in the fluid layer in contact with the needle, and integrating over the entire surface thereof:

$$F_{roz} = i2L\omega\mu A_a^* e^{i\omega t} \int_0^{\pi/2} \left(-\frac{\partial g}{\partial p}\right)_{p=0} d\theta$$

where $\mu$ is the viscosity of subphase 1'. Knowing the force exerted on the needle 3 by the pair of magnets 13, as well as the friction due to the subphase 1', the second law of Newton can be considered:

$$-k_i\big(z_a(t) - z_i(t)\big) - F_{roz} = m\frac{\partial^2 z_a}{\partial t^2}$$

Substituting each of the terms that have been previously defined, the force balance equation takes the form:

$$-k_i\big(A_a^* e^{i\omega t} - A_i e^{i\omega t}\big) - i2L\omega\mu A_a^* e^{i\omega t} \int_0^{\frac{\pi}{2}} \left(-\frac{\partial g}{\partial p}\right)_{p=0} d\theta = -m\omega^2 A_a^* e^{i\omega t}$$

By rearranging terms, the quotient between the amplitudes of both oscillatory movements can be obtained:

$$AR_{pp}^* = \frac{A_a^*}{A_i} = \frac{k_i}{k_i - m\omega^2 + i2L\omega\mu \int_0^{\frac{\pi}{2}} \left(-\frac{\partial g}{\partial p}\right)_{p=0} d\theta}$$

Again, the *pp* subscript refers to the ratio of amplitudes between two positions, that of the needle 3 and that of the magnets 13. The modulus of the complex amplitude ratio defined in the above equation will be equal to the quotient between the amplitudes of the oscillating movements of needle and magnets, while the argument will be equal to the phase difference between both motions:

$$\left|AR_{pp}^*\right|_{theor}$$
$$= \frac{k_i}{\sqrt{\left(k_i - m\omega^2 + 2L\omega\mu \int_0^{\frac{\pi}{2}} \left(\frac{\partial(\mathrm{Im}[g])}{\partial p}\right)_{p=0} d\theta\right)^2 + \left(2L\omega\mu \int_0^{\frac{\pi}{2}} \left(\frac{\partial(\mathrm{Re}[g])}{\partial p}\right)_{p=0} d\theta\right)^2}}$$

$$\big(\delta_{pp}\big)_{theor} = \mathrm{Arctan}\left(\frac{2L\omega\mu \int_0^{\frac{\pi}{2}} \left(\frac{\partial(\mathrm{Re}[g])}{\partial p}\right)_{p=0} d\theta}{k_i - m\omega^2 + 2L\omega\mu \int_0^{\frac{\pi}{2}} \left(\frac{\partial(\mathrm{Im}[g])}{\partial p}\right)_{p=0} d\theta}\right)$$

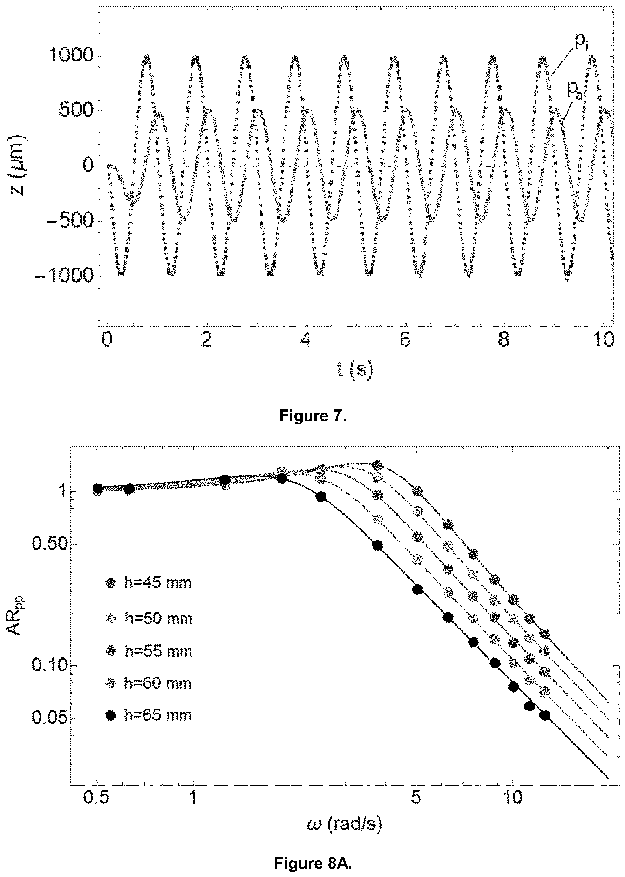

where the subscript *theor* indicates that they correspond to the values of the amplitude ratio and the phase lag predicted by the theoretical model above described. In the equations that define the amplitude ratio and the phase lag between the displacements of the needle and the magnets there is only one unknown term, the elastic constant $k_i$, which will depend on the needle used (geometric dimensions and magnetic moment per unit length), the distance between the magnets and the interface, and the distance between the magnets. The calibration procedure of the device consists of determining the value of the constant $k_i$ for the different configurations related to the aforementioned aspects that will be used. Both the amplitude ratio and the phase shift can be measured directly with the MNISR device of the present invention: the platform 14 holding the magnets 13 is provided with a linear encoder that allows knowing the platform position at any time with great precision and the optical inspection system detects the position of the needle at every moment. In this way, **Figure 7** can be constructed, in which the two signals, the position of the magnets $p_i$ and the position of the needle $p_a$ in the z-coordinate as a function of time t, can be seen for a specific case. By fitting each of them to a sine function, the software of the control unit that controls the MNISR system calculates the ratio between both amplitudes and the phase shift. That is, the rheometer provides two experimental data:

$$\left|AR_{pp}^*\right|_{exp}$$

$$\left(\delta_{pp}\right)_{exp}$$

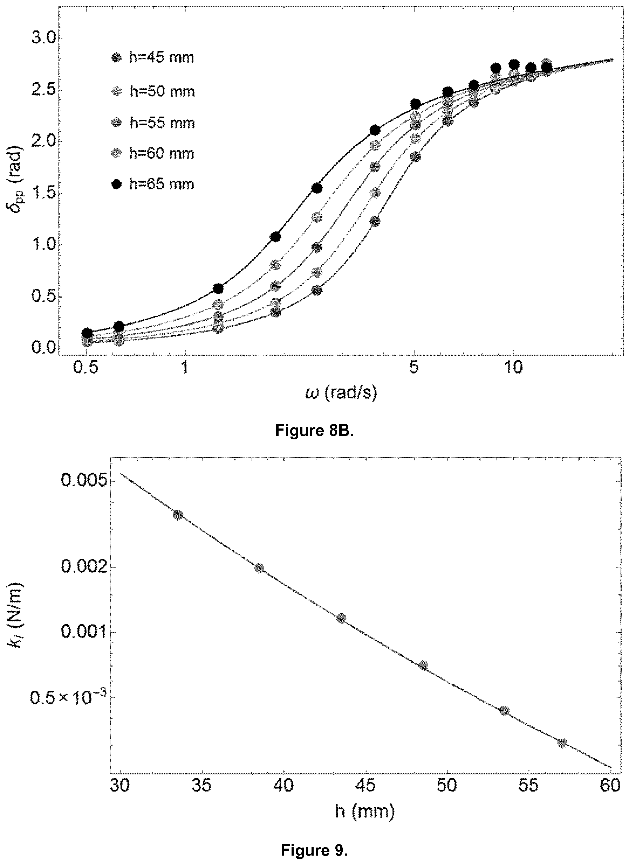

where the subscript *exp* indicates that they are experimental data. Therefore, the calibration of the device consists of carrying out frequency sweeps for those configurations that one desires to use in the experiments, so that for each of the configurations a value of $k_i$ can be calculated that fits the data collected experimentally to the theoretical equation that defines the amplitude ratio. The quality of the calibration can then be checked by comparing the adjustment of the phase lag measured experimentally with that resulting from entering the calculated value of $k_i$ in the equation that defines the phase lag. In **Figures 8A and 8B** one can see the result of the calibration for the ISR-42 needle of KSV-Biolin, with a distance between magnets of 2 cm for several different magnets-interface distances *h*.

**Figure 9** shows the values of $k_i$ versus the magnets-interface distance h obtained experimentally through the calibration procedure, as well as the curve corresponding to the calculation of $k_i$ by means of the above described numerical resolution of the magnetic field created by the magnets. The excellent agreement between the experimental curve and the numerically calculated curve is particularly useful, since it confirms that the calculation of the magnetic force by electromagnetic techniques allows one to predict with great precision the value of $k_i$ corresponding to any distance *h* between the magnets and the interface.

Similarly, if the height of the interface is the same each time the rheometer is used (this can be achieved by the precise control of the added volume of water or liquid that forms the subphase), it is not necessary to calibrate the rheometer all of the times it will be used, and the experiments can be carried out on thin films or monolayers directly. It is usual to perform a first experimental calibration for each needle, to obtain the magnetic moment per unit length of the needle. From there, no more calibrations would be necessary; the numerical calculation would be enough to obtain the parameter $k_i$.

Next, we make a comparison of the operation of the new MNISR system proposed in the present invention (Figure 3) with traditional MNISR systems (Figure 2). In traditional MNISR systems, another type of representation is usual, which we will denote with subscript *fp*, which relates the force applied to the displacement of the probe (this is because these two magnitudes are the ones measured by traditional MNISR devices). As will be seen below, this representation is equivalent to the *pp* representation discussed above and serves to illustrate the advantage of the new MNISR device at low frequency. Hereafter, we label the amplitude ratio and the phase lag between force and displacement $AR_{fp}$ and $\delta_{fp}$ respectively, where the subscript *fp* indicates that the applied force and position of the needle are being related. First, we show how to transform the experimental data from the *pp* representation to the traditional *fp* representation:

$$AR_{fp}^* = \frac{z_a(t)}{F(t)} = \frac{A_a^* e^{i\omega t}}{-k_i(A_a^* e^{i\omega t} - A_i e^{i\omega t})} = \frac{A_a^*}{k_i(A_i - A_a^*)}$$

By manipulating the obtained expression we calculate the modulus and argument:

$$\left|AR_{fp}^*\right|_{exp} = \frac{1}{k_i\sqrt{1 + \frac{1}{\left|AR_{pp}^*\right|_{exp}^2} - \frac{2\cos\left(\delta_{pp}\right)_{exp}}{\left|AR_{pp}^*\right|_{exp}}}}$$

$$\left(\delta_{fp}\right)_{exp} = \text{Arctan}\left(-\frac{\sin\left(\delta_{pp}\right)_{exp}}{\left|AR_{pp}^*\right|_{exp}^2 - \cos\left(\delta_{pp}\right)_{exp}}\right)$$

Using the force balance equation, the theoretical expressions for the amplitude ratio and phase shift in the *fp* representation can be calculated analogously:

$$\left|AR_{fp}^*\right|_{theor} = \frac{1}{\sqrt{\left(-m\omega^2 + 2L\omega\mu\int_0^{\frac{\pi}{2}}\left(\frac{\partial(\text{Im}[g])}{\partial p}\right)_{p=0}d\theta\right)^2 + \left(2L\omega\mu\int_0^{\frac{\pi}{2}}\left(\frac{\partial(\text{Re}[g])}{\partial p}\right)_{p=0}d\theta\right)^2}}$$

$$\left(\delta_{fp}\right)_{theor} = \text{Arctan}\left(\frac{2L\omega\mu\int_0^{\frac{\pi}{2}}\left(\frac{\partial(\text{Re}[g])}{\partial p}\right)_{p=0}d\theta}{-m\omega^2 + 2L\omega\mu\int_0^{\frac{\pi}{2}}\left(\frac{\partial(\text{Im}[g])}{\partial p}\right)_{p=0}d\theta}\right)$$

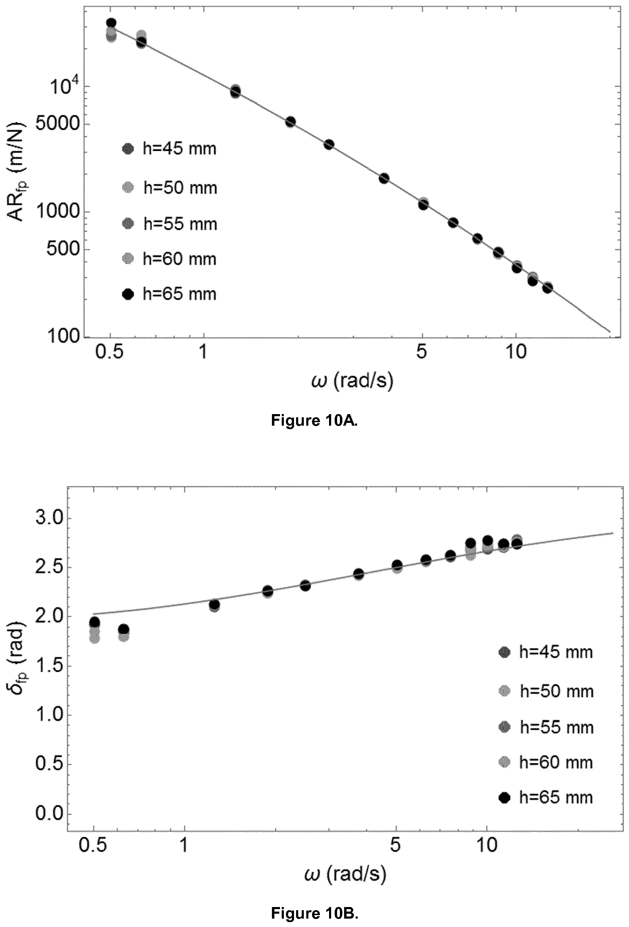

**Figures 10A and 10B** show, respectively, the comparison between the experimental and the theoretical amplitude ratio and phase shift. As can be seen, contrary to what happens in the *pp* representation, all the experimental data converge to the same curve, regardless of the value of $k_i$, that is, independently of the distance between magnets or the distance between the interface and the magnets. This is consistent with the theoretical prediction, since $k_i$ does not appear in the pair of equations that define the amplitude relation and the phase shift in the *fp* representation.

To illustrate the differences with the traditional MNISR devices, it should be remembered that the traditional MNISR devices are equivalent to a forced and damped oscillator, in which there is an external force due to the field created by a pair of coils, a damping due to friction with the subphase, and a force that holds the equilibrium position of the needle fixed; this force is due to a potential well created, either by another couple of coils (Brooks et al, Reynaert et al., Verwijlen et al.) or by a positioning magnet that remains at a fixed position (Tajuelo et al). The force due to this static potential well can be represented as an elastic force characterized by a recovery constant that we will refer to as $k_{pos}$ (elastic constant of positioning). The equation of movement takes the form:

$$F_0 e^{i\omega t} - i2L\omega\mu A_a^* e^{i\omega t}\int_0^{\frac{\pi}{2}}\left(-\frac{\partial g}{\partial p}\right)_{p=0}d\theta - k_{pos}A_a^* e^{i\omega t} = -m\omega^2 A_a^* e^{i\omega t}$$

where $F_0$ is the amplitude of the forcing. Working in the above expressions, one can obtain the expressions for the theoretical amplitude ratio and phase shift in the *fp* representation for a traditional MNISR device:

$$\left|AR_{fp}^*\right|_{theor}$$

$$= \frac{1}{\sqrt{\left(k_{pos} - m\omega^2 + 2L\omega\mu\int_0^{\frac{\pi}{2}}\left(\frac{\partial(\text{Im}[g])}{\partial p}\right)_{p=0}d\theta\right)^2 + \left(2L\omega\mu\int_0^{\frac{\pi}{2}}\left(\frac{\partial(\text{Re}[g])}{\partial p}\right)_{p=0}d\theta\right)^2}}$$

$$\left(\delta_{fp}\right)_{theor} = \text{Arctan}\left(\frac{2L\omega\mu\int_0^{\frac{\pi}{2}}\left(\frac{\partial(\text{Re}[g])}{\partial p}\right)_{p=0}d\theta}{k_{pos} - m\omega^2 + 2L\omega\mu\int_0^{\frac{\pi}{2}}\left(\frac{\partial(\text{Im}[g])}{\partial p}\right)_{p=0}d\theta}\right)$$

These two equations are the same as those obtained for the MNISR system of the present invention except for the presence in both of $k_{pos}$, the elastic constant of the potential well that establishes the equilibrium position of the needle.

That is, the theoretical model predicts that the dynamics governing the new MNISR system is equivalent to that corresponding to traditional MNISR systems, making the $k_{pos}$ elastic constant strictly zero. It should be remembered that in traditional MNISR devices the value of the $k_{pos}$ constant can be reduced, but never completely eliminated, since it is necessary to keep the needle aligned and at an equilibrium position in the center of the rheometer. Therefore, in traditional MNISR systems, a $k_{pos}$ reduction is inevitably accompanied by a greater influence of any external disturbance (air currents, convective currents in the subphase, external vibrations, etc ...) and consequently of an increasing difficulty in the experimental procedure. In the new MNISR device of the present invention, a zero $k_{pos}$ is achieved while a well-defined equilibrium position and needle alignment are ensured. Furthermore, as will be seen below, a null value of $k_{pos}$ presents great advantages in the characterization of the rheological properties of thin films, especially at low frequencies.

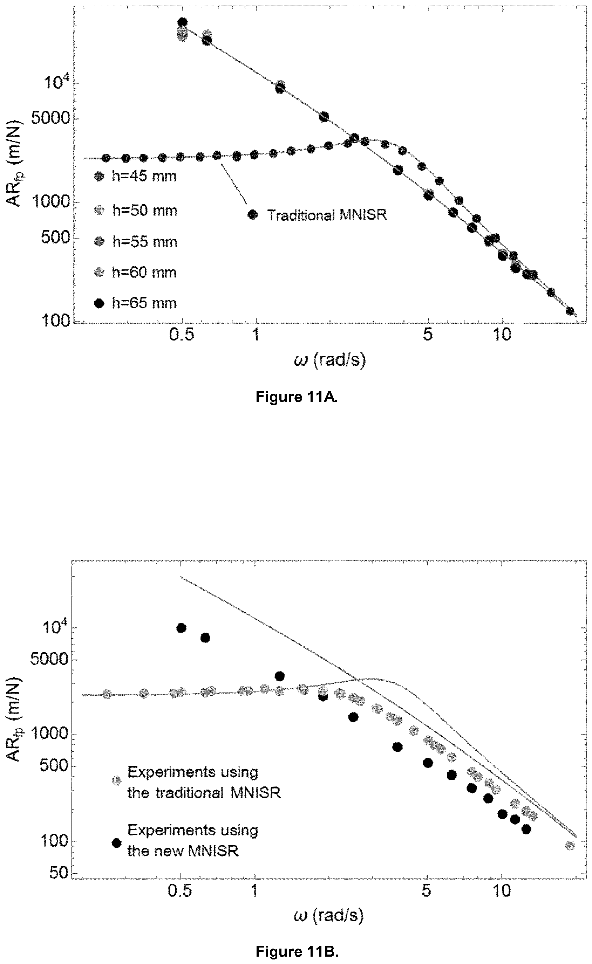

**Figure 11A** shows a comparison of the amplitude ratio in the *fp* representation for a clean water-air interface for the two MNISR systems, the traditional one and the new system object of the present invention. The continuous curves represent the best fits resulting from their respective calibrations. As can be seen, both curves converge at high frequencies, but the traditional MNISR system has a plateau at low frequencies that is not observed in the new rheometer. Analyzing the theoretical equations that define each of the systems, it is demonstrated that for the traditional MNISR system it is verified:

$$\lim_{\omega\to 0}\left|AR_{fp}^*\right|_{teo} = \frac{1}{k_{pos}}$$

Therefore, the differences at low frequencies have their source in the strictly zero value of $k_{pos}$ in the new MNISR system. These curves represent the response of the rheometer itself, in the absence of thin film or monolayer (in the absence of interfacial viscoelasticity). This response is determined by different contributions:

-    Traditional MNISR system: inertia + subphase drag + positioning potential well ($k_{pos}$).
-    New MNISR system: inertia + subphase drag.

The advantages of not having a positioning potential well in the new MNISR system can be seen in **Figure 11B,** which includes the amplitude ratio experimentally measured on a thin film 1 of silicone oil with both MNISR systems. In this figure, the best fits to the curves of Figure 11A obtained through the calibration process are also shown. That is, the response that is measured in the presence of the thin film depends on the following contributions:

-    Traditional MNISR system: inertia + subphase drag + positioner potential well ($k_{pos}$) + interface drag.
-    New MNISR system: inertia + subphase drag + interface drag.

The ultimate resolution of the measurements obtained in the MNISR systems depends on the ability to separate the contribution due to the interface from the global response measured experimentally. This separation will be the more precise the greater the contribution due to the interface becomes when compared to the other terms, i.e., the greater the difference between the amplitude ratio for the clean interface and the amplitude ratio in the presence of the thin film the better the resolution. As can be seen in Figure 11 B, at low frequencies the amplitude ratio measured with the traditional MNISR system for the silicone oil thin film converges to the above-mentioned plateau in Figure 11 A. That is, at low frequencies the positioning potential well characterized by $k_{pos}$ dominates the dynamics of the system, even in the presence of the thin film 1. This means that with a traditional MNISR system and at low frequencies, it is not possible to discriminate the contribution due to the interface, and therefore it is not possible to make significant measurements of the viscoelastic properties of the interface. On the contrary, in the new MNISR system object of the present invention, the zero value of $k_{pos}$ means that, even at low frequencies, the amplitude ratio measured in the presence of the thin film is different from that measured with the clean interface, allowing the calculation of the viscoelastic properties of the interface.

The procedure to calculate the viscoelastic moduli from the data obtained in the presence of the thin film 1 to be characterized is analogous to that described in Verwijlen et al, 2011, adapted to the more convenient *pp* representation for the new MNISR system. First, the force balance equation is completed with the term corresponding to the friction due to the interface:

$$\left(AR_{pp}^*\right)_{theor} = \frac{A_a^*}{A_i} = \frac{k_i}{k_i - m\omega^2 + i2L\omega\mu \int_0^{\frac{\pi}{2}} \left(-\frac{\partial g}{\partial p}\right)_{p=0} d\theta + i2L\omega\mu Bo^* \left(-\frac{\partial g}{\partial p}\right)_{p=0,\ \theta=\pi/2}}$$

From the calibration described above, the value of $k_i$ is already known, so the only unknown term in this equation is $Bo^*$ the complex Boussinesq number. As mentioned in the description of the velocity profile calculation, the function $g(p, \theta)$ depends on $Bo^*$ through the Boussinesq-Scriven boundary condition. Therefore, it is not possible to obtain $Bo^*$ directly from the last equation. To find the correct value of $Bo^*$, i.e., the value that fits the theoretical equation to the result obtained experimentally, the following iterative procedure, is carried out:

$$Bo^{*\{i+1\}} = \frac{\left(AR_{pp}^*\right)_{exp}}{\left(AR_{pp}^*\right)_{theor}^{\{i\}}} Bo^{*\{i\}}$$

where the numerator is the amplitude ratio measured experimentally in the presence of the thin film 1 or monolayer, and the denominator is the amplitude ratio calculated from the theoretical equation by entering in it $Bo^{*\{i\}}$, the complex Boussinesq number of the step i of the iterative procedure. After a number of iterations, which generally depends on the distance between the initial value given to $Bo$ and the stationary final value obtained through the iterative procedure, convergence is reached and the value of $Bo^*$ which adjusts the experimental data to the theoretical equation is obtained. Once this is done, the elastic modulus $G'_s$, the viscous modulus $G''_s$ and the complex viscosity $\mu^*_s$ are calculated as:

$$G'_s = -\omega a\mu\,\mathrm{Im}[Bo^*]$$

$$G''_s = \omega a\mu\,\mathrm{Re}[Bo^*]$$

$$\mu_s^* = a\mu Bo^*$$

where $\mu$ is the viscosity of subphase 1' and $\alpha$ is the radius of the magnetic needle 3.

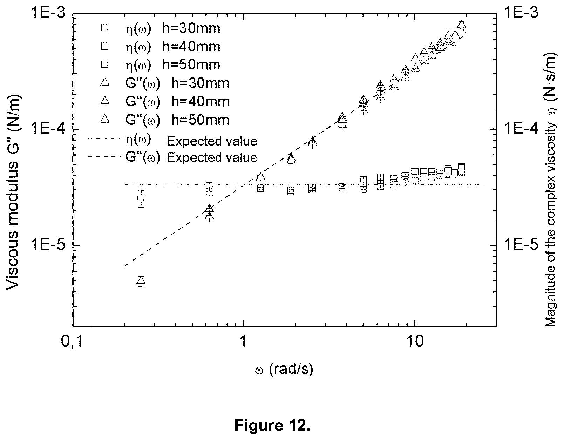

**Figure 12** shows the final result of an experiment on a thin film 1 of silicone oil for three different interface-magnet distances, that is, for three different values of $k_i$.

## Claims

1. Needle drive system of a magnetic needle interfacial shear rheometer, wherein the magnetic needle interfacial shear rheometer (30) comprises a magnetic needle (3) and a channel (16) containing an interface with a plane, wherein the magnetic needle (3) is located in the interface and wherein a movement of the magnetic needle (3) occurs within the channel (16); **characterized in that** the needle drive system comprises:

   - two permanent magnets (13) with magnetic axes perpendicular to the plane of the interface in which the magnetic needle (3) of the rheometer (30) is located, wherein both magnets (13) are located at a same distance (h) above the interface plane, the magnets (13) having their polarities inverted one with respect to the other;
   - drive means (15) configured to move the magnets (13) in the longitudinal direction of the channel (16) of the rheometer (30), parallel to the plane of the interface, keeping a distance between the magnets (d) constant; and
   - a control unit (22) in charge of controlling the drive means (15).

2. Drive system according to claim 1, further comprising supporting means (14) of the magnets (13), placing the magnets at a vertical distance (h) from the plane of the interface and transmitting a longitudinal movement from the driving means (15) to the magnets (13).

3.  Drive system according to claim 2, wherein either the supporting means (14) comprise a plate with an intermediate slot (21) between both magnets (13) to allow the capture of a movement of the magnetic needle (3) by a camera (12) of the rheometer (30) or alternatively, the support means (14) comprise a plate of transparent material.

4.  Drive system according to any of the preceding claims, wherein the drive means (15) comprise a motor with a linear encoder to determine at any time the longitudinal position of the magnets (13).

5.  Drive system according to any of the preceding claims, further comprising a system for positioning the magnets (13) in a longitudinal direction parallel to the plane of the interface, configured to modify the distance between the magnets (d).

6.  Drive system according to any of the preceding claims, further comprising a system for positioning the magnets (13) in a direction perpendicular to the plane of the interface, configured to modify a vertical distance (h) between the magnets (13) and said plane.

7.  Magnetic needle interfacial shear rheometer, comprising:

    - a trough (23) in which a subphase (1') is placed;
    - a camera (12) for capturing a movement of a magnetic needle (3);
    - a channel (16) within which the movement of the magnetic needle (3) occurs;
    **characterized in that** the rheometer (30) further comprises the needle drive system according to any of claims 1 to 4.

8.  A magnetic needle interfacial shear rheometer according to claim 7, wherein the control unit (22) is further in charge of controlling the camera (12).

9.  A magnetic needle interfacial shear rheometer according to claim 8, wherein the control unit (22) is configured to:

    - activate the actuating means (15) to move in an oscillatory way the two magnets (13) at a frequency $\omega$ in a longitudinal direction of the channel (16);
    - obtain a position of the magnets ($p_i$) from information of the drive means (15);
    - obtain a position of the magnetic needle ($p_a$) from images captured by the camera (12);
    - obtain a phase shift ($\delta_{pp}$) and an amplitude ratio ($AR_{pp}$) between the position of the magnets ($p_i$) and the position of the magnetic needle ($p_a$);
    - obtain, from a prior calibration procedure, an elastic constant $k_i$ of a potential well created by the magnets (13) on the magnetic needle (3);
    - calculate, using the elastic constant $k_i$, the phase shift ($\delta_{pp}$) and the amplitude ratio ($AR_{pp}$), the dynamic moduli and the complex interfacial viscosity of the film (1) for the frequency $\omega$.

10. A magnetic needle interfacial shear rheometer according to claim 9, wherein the control unit (22) is further configured to carry out frequency sweeps $\omega$ within a frequency range and to obtain the dynamic moduli and the complex interfacial viscosity of the film (1) for that frequency range.

11. A magnetic needle interfacial shear rheometer according to any of claims 7 to 10, further comprising a transparent bottom window (17), made in the base of the trough (23), and a light source (19) to illuminate the magnetic needle through the bottom window (17) and/or movable barriers (18) to control the spatial extension of the film (1) inside the trough (23).

12. Method of actuating a needle (3) of a magnetic needle interfacial shear rheometer (30), wherein the magnetic needle interfacial shear rheometer (30) comprises the magnetic needle (3) and a channel (16) containing an interface with a plane, wherein the magnetic needle (3) is located in the interface and wherein a movement of the magnetic needle (3) occurs within the channel (16); **characterized in that** the method comprises moving, in the longitudinal direction of the channel (16) of the rheometer (30), parallel to the plane of the interface in which the magnetic needle (3) of the rheometer (30) is located, two permanent magnets (13) with magnetization axes perpendicular to the plane of the interface, both magnets (13) being located at a same distance (h) above the plane of the interface the magnets (13) having their polarities inverted one with respect to the other, and wherein a distance between the magnets (d) is kept constant.

13. Method of actuating the needle of the magnetic needle interfacial shear rheometer (30) according to claim 12, wherein the displacement is carried out in an oscillatory way.

14. Method of measuring a viscosity of a film using the magnetic needle interfacial shear rheometer (30), which employs the method of driving the needle of the rheometer (30) according to any of claims 12 to 13, **characterized in that** it comprises:

- moving the two magnets (13) in an oscillatory way in the longitudinal direction of the channel (16) at a frequency $\omega$;
- obtaining the position of the magnets ($p_i$);
- obtaining the position of the magnetic needle ($p_a$);
- obtaining the phase shift ($\delta_{PP}$) and the amplitude ratio ($AR_{pp}$) between the position of the magnets ($p_i$) and the position of the magnetic needle ($p_a$);
- obtaining, from a previous calibration procedure, an elastic constant $k_i$ of a potential well created by the magnets (13) on the magnetic needle (3);
- calculating the dynamic moduli and the complex interfacial viscosity of the film (1) for the frequency $\omega$ using the elastic constant $k_i$, the phase shift ($\delta_{PP}$) and amplitude ratio ($AR_{pp}$).

15. Method of measuring the viscosity of the film using the magnetic needle interfacial shear rheometer (30) according to claim 14, further comprising performing sweeps in frequency $\omega$ within a frequency range and obtaining the dynamic moduli and the complex interfacial viscosity of the film (1) for the frequency range.

**Patentansprüche**

1. Nadelantriebssystem eines Magnetnadelgrenzflächenscherrheometers, wobei das Magnetnadelgrenzflächenscherrheometer (30) eine Magnetnadel (3) und einen eine Grenzfläche mit einer Ebene bildenden Kanal (16) umfasst, wobei die Magnetnadel (3) in der Grenzfläche angeordnet ist und wobei in dem Kanal (16) eine Bewegung der Magnetnadel (3) erfolgt; **dadurch gekennzeichnet, dass** das Nadelantriebssystem umfasst:

- zwei Permanentmagnete (13) mit magnetischen Achsen senkrecht zur Ebene der Grenzfläche, in der die Magnetnadel (3) des Rheometers (30) angeordnet ist, wobei beide Magnete (13) in gleichem Abstand (h) über der Grenzflächenebene angeordnet sind, wobei die Polaritäten der Magnete (13) einander entgegengesetzt sind;
- Antriebsmittel (15), die dazu ausgelegt sind, die Magnete (13) unter Aufrechterhaltung eines konstanten Abstands zwischen den Magneten (d) in Längsrichtung des Kanals (16) des Rheometers (30) parallel zur Ebene der Grenzfläche zu bewegen; und
- eine Steuereinheit (22) zur Steuerung der Antriebsmittel (15).

2. Antriebssystem nach Anspruch 1, ferner umfassend Haltemittel (14) für die Magnete (13), die die Magnete in einem vertikalen Abstand (h) von der Ebene der Grenzfläche positionieren und eine Längsbewegung von den Antriebsmitteln (15) auf die Magnete (13) übertragen.

3. Antriebssystem nach Anspruch 2, wobei die Haltemittel (14) zum Erfassen einer Bewegung der Magnetnadel (3) durch die Kamera (12) des Rheometers (30) entweder aus einer Platte mit einem Zwischenschlitz (21) zwischen den beiden Magneten (13) bestehen, oder die Haltemittel (14) alternativ hierzu aus einer Platte aus transparentem Material bestehen.

4. Antriebssystem nach einem der vorstehenden Ansprüche, wobei die Antriebsmittel (15) aus einem Motor mit einem Linearmessgeber zur jederzeitigen Bestimmung der Längsposition der Magnete (13) bestehen.

5. Antriebssystem nach einem der vorstehenden Ansprüche, ferner umfassend ein System zur Positionierung der Magnete (13) in einer Längsrichtung parallel zur Ebene der Grenzfläche, das zur Änderung des Abstands zwischen den Magneten (d) ausgelegt ist.

6. Antriebssystem nach einem der vorstehenden Ansprüche, ferner umfassend ein System zur Positionierung der Magnete (13) in einer Richtung senkrecht zur Ebene der Grenzfläche, das zur Änderung des vertikalen Abstands (h) zwischen den Magneten (13) und der genannten Ebene ausgelegt ist.

7. Magnetnadelgrenzflächenscherrheometer, umfassend:

    - eine Kammer (23), in der eine Unterphase (1') angeordnet ist;
    - eine Kamera (12) zum Erfassen der Bewegung einer Magnetnadel (3);
    - einen Kanal (16), in dem die Bewegung der Magnetnadel (3) erfolgt; **dadurch gekennzeichnet, dass** das Rheometer (30) ferner das Nadelantriebssystem nach einem der Ansprüche 1 bis 4 umfasst.

8. Magnetnadelgrenzflächenscherrheometer nach Anspruch 7, wobei die Steuereinheit (22) ferner für die Steuerung der Kamera (12) vorgesehen ist.

9. Magnetnadelgrenzflächenscherrheometer nach Anspruch 8, wobei die Steuereinheit (22) ferner dazu ausgelegt ist:

    - die Stellmittel (15) zu aktivieren, um die beiden Magnete (13) mit einer Frequenz $\omega$ oszilierend in Längsrichtung des Kanals (16) zu bewegen;
    - aus Informationen der Antriebsmittel (15) eine Position der Magnete ($p_i$) zu ermitteln;
    - aus von der Kamera (12) aufgenommenen Bildern eine Position der Magnetnadel ($p_a$) zu ermitteln;
    - eine Phasenverschiebung ($\delta_{pp}$) und ein Amplitudenverhältnis ($AR_{pp}$) zwischen der Position der Magnete ($p_i$) und der Position der Magnetnadel ($p_a$) zu ermitteln;
    - durch ein vorheriges Kalibrierverfahren eine Elastizitätskonstante $k_i$ einer Potentialmulde, die von den Magneten (13) auf der Magnetnadel (3) erzeugt wird, zu ermitteln;
    - unter Verwendung der Elastizitätskonstante $k_i$, der Phasenverschiebung ($\delta_{pp}$) und des Amplitudenverhältnisses ($AR_{pp}$), die dynamischen Moduln und die komplexe Grenzflächenviskosität des Films (1) für die Frequenz $\omega$ zu berechnen.

10. Magnetnadelgrenzflächenscherrheometer nach Anspruch 9, wobei die Steuereinheit (22) ferner dazu ausgelegt ist, Frequenzabtastungen $\omega$ innerhalb eines Frequenzbereichs durchzuführen und die dynamischen Moduln und die komplexe Grenzflächenviskosität des Films (1) für diesen Frequenzbereich zu ermitteln.

11. Magnetnadelgrenzflächenscherrheometer nach einem der Ansprüche 7 bis 10, ferner umfassend ein an der Unterseite der Kammer (23) ausgebildetes transparentes Bodenfenster (17) und eine Lichtquelle (19) zum Beleuchten der Magnetnadel durch das Bodenfenster (17) und/oder bewegliche Barrieren (18) zum Regeln der räumlichen Ausdehnung des Films (1) innerhalb der Kammer (23).

12. Verfahren zum Betätigen einer Nadel (3) eines Magnetnadelgrenzflächenscherrheometers (30), wobei das Magnetnadelgrenzflächenscherrheometer (30) die Magnetnadel (3) und einen eine Grenzfläche mit einer Ebene bildenden Kanal (16) umfasst, wobei die Magnetnadel (3) in der Grenzfläche angeordnet ist und wobei in dem Kanal (16) eine Bewegung der Magnetnadel (3) erfolgt; **dadurch gekennzeichnet, dass** das Verfahren das Bewegen von zwei Permanentmagneten (13) mit Magnetisierungsachsen senkrecht zur Ebene der Grenzfläche, in der die Magnetnadel (3) des Rheometers (30) angeordnet ist, in Längsrichtung des Kanals (16) des Rheometers (30) parallel zu der Ebene der Grenzfläche umfasst, wobei beide Magnete (13) im gleichen Abstand (h) über der Grenzflächenebene angeordnet sind, wobei die Polaritäten der Magnete (13) einander entgegengesetzt sind, und wobei ein konstanter Abstand (d) zwischen den Magneten aufrechterhalten wird.

13. Verfahren zum Betätigen der Nadel des Magnetnadelgrenzflächenscherrheometers (30) nach Anspruch 12, wobei die Bewegung oszillierend erfolgt.

14. Verfahren zum Messen der Viskosität eines Films unter Verwendung des Magnetnadelgrenzflächenscherrheometers (30), bei dem das Verfahren zum Antrieb der Nadel des Rheometers (30) nach einem der Ansprüche 12 bis 13 zur Anwendung kommt, **dadurch gekennzeichnet, dass** es Folgendes umfasst:

    - das oszillierende Bewegen der beiden Magnete (13) mit einer Frequenz $\omega$ in Längsrichtung des Kanals (16);
    - Ermitteln der Position der Magnete ($p_i$);
    - Ermitteln der Position der Magnetnadel ($p_a$);
    - Ermitteln der Phasenverschiebung ($\delta_{pp}$) und des Amplitudenverhältnisses ($AR_{pp}$) zwischen der Position der Magnete ($p_i$) und der Position der Magnetnadel ($p_a$);
    - Ermitteln einer Elastizitätskonstante $k_i$ einer Potentialmulde, die von den Magneten (13) auf der Magnetnadel (3) erzeugt wird;
- Berechnen der dynamischen Moduln und der komplexen Grenzflächenviskosität des Films (1) für die Frequenz $\omega$ unter Verwendung der Elastizitätskonstante $k_i$, der Phasenverschiebung ($\delta_{pp}$) und des Amplitudenverhältnisses ($AR_{pp}$).

15. Verfahren zum Messen der Viskosität des Films unter Verwendung des Magnetnadelgrenzflächenscherrheometers nach Anspruch 14, ferner umfassend das Durchführen von Abtastungen bei Frequenz $\omega$ innerhalb eines Frequenzbereichs und Ermitteln der dynamischen Moduln und der komplexen Grenzflächenviskosität des Films (1) für den Frequenzbereich.

**Revendications**

1. Système d'entraînement de l'aiguille de rhéomètre interfacial à cisaillement utilisant une aiguille magnétique, dans lequel le rhéomètre interfacial à cisaillement à aiguille magnétique (30) comprend une aiguille magnétique (3) et un canal (16) contenant une interface avec un plan, dans lequel l'aiguille magnétique (3) est située dans l'interface et dans lequel un mouvement de l'aiguille magnétique (3) se produit dans le canal (16) ; **caractérisé en ce que** le système d'entraînement de l'aiguille comprend :

   - deux aimants permanents (13) avec des axes magnétiques perpendiculaires au plan de l'interface dans lequel l'aiguille magnétique (3) du rhéomètre (30) est située, dans lequel les deux aimants (13) sont situés à une même distance (h) au-dessus du plan de l'interface, les aimants (13) ayant leurs polarités inversées l'une par rapport à l'autre ;
   - des moyens d'entraînement (15) configurés pour déplacer les aimants (13) dans la direction longitudinale du canal (16) du rhéomètre (30), parallèlement au plan de l'interface, en maintenant une distance constante entre les aimants (d) ; et
   - une unité de commande (22) chargée de contrôler les moyens d'entraînement (15).

2. Système d'entraînement selon la revendication 1, comprenant en outre des moyens de support (14) des aimants (13), plaçant les aimants à une distance verticale (h) du plan de l'interface et transmettant un mouvement longitudinal des moyens d'entraînement (15) aux aimants (13).

3. Système d'entraînement selon la revendication 2, dans lequel soit les moyens de support (14) comprennent une plaque avec une fente intermédiaire (21) entre les deux aimants (13) pour permettre la capture d'un mouvement de l'aiguille magnétique (3) par la caméra (12) du rhéomètre (30), soit les moyens de support (14) comprennent une plaque de matériau transparent.

4. Système d'entraînement selon l'une des revendications précédentes, dans lequel les moyens d'entraînement (15) comprennent un moteur avec un codeur linéaire pour déterminer à tout moment la position longitudinale des aimants (13).

5. Système d'entraînement selon l'une des revendications précédentes, comprenant en outre un système pour positionner les aimants (13) dans une direction longitudinale parallèle au plan de l'interface, configuré pour modifier la distance entre les aimants (d).

6. Système d'entraînement selon l'une des revendications précédentes, comprenant en outre un système pour positionner les aimants (13) dans une direction perpendiculaire au plan de l'interface, configuré pour modifier une distance verticale (h) entre les aimants (13) et ledit plan.

7. Rhéomètre interfacial à cisaillement à aiguille magnétique, comprenant :

   - un creux (23) dans laquelle est placée une sous-phase (1') ;
   - une caméra (c) permettant de capter un mouvement d'une aiguille magnétique (3) ;
   - un canal (16) dans lequel le mouvement de l'aiguille magnétique (3) se produit ; **caractérisé en ce que** le rhéomètre (30) comprend en outre le système d'entraînement de l'aiguille selon l'une des revendications 1 à 4.

8. Rhéomètre interfacial à cisaillement à aiguille magnétique selon la revendication 7, dans lequel l'unité de commande (22) est en outre chargée de contrôler la caméra (12).

9. Rhéomètre interfacial à cisaillement à aiguille magnétique selon la revendication 8, dans lequel l'unité de commande (22) est configurée pour :

- activer les moyens d'actionnement (15) pour déplacer de manière oscillante les deux aimants (13) à une fréquence ω dans une direction longitudinale du canal (16) ;
- obtenir une position des aimants ($p_i$) à partir des informations des moyens d'actionnement (15) ;
- obtenir une position de l'aiguille magnétique ($p_a$) à partir des images captées par la caméra (12) ;
- obtenir un déphasage ($\delta_{PP}$) et un rapport d'amplitude ($AR_{pp}$) entre la position des aimants ($p_i$) et la position de l'aiguille magnétique ($p_a$) ;
- obtenir, à partir d'une procédure de calibrage préalable, une constante élastique $k_i$ d'un puits de potentiel créé par les aimants (13) sur l'aiguille magnétique (3) ;
- calculer, à l'aide de la constante élastique $k_i$, le déphasage ($\delta_{pp}$) et le rapport d'amplitude ($AR_{pp}$), les modules dynamiques et la viscosité interfaciale complexe du film (1) pour la fréquence ω.

10. Rhéomètre interfacial à cisaillement à aiguille magnétique selon la revendication 9, dans lequel l'unité de commande (22) est en outre configurée pour effectuer des balayages de fréquence ω dans une gamme de fréquences et pour obtenir les modules dynamiques et la viscosité interfaciale complexe du film (1) pour cette gamme de fréquences.

11. Rhéomètre interfacial à cisaillement à aiguille magnétique selon l'une des revendications 7 à 10, comprenant en outre une fenêtre inférieure transparente (17), réalisée dans la base du creux (23), et une source de lumière (19) pour éclairer l'aiguille magnétique à travers la fenêtre inférieure (17) et/ou des barrières mobiles (18) pour contrôler l'extension spatiale du film (1) à l'intérieur du creux (23).

12. Procédé d'actionnement d'une aiguille (3) d'un rhéomètre interfacial à cisaillement à aiguille magnétique (30), dans lequel le rhéomètre interfacial à cisaillement à aiguille magnétique (30) comprend l'aiguille magnétique (3) et un canal (16) contenant une interface avec un plan, dans lequel l'aiguille magnétique (3) est située dans l'interface et dans lequel un mouvement de l'aiguille magnétique (3) se produit à l'intérieur du canal (16) ; **caractérisé en ce que** le procédé comprend le déplacement, dans la direction longitudinale du canal (16) du rhéomètre (30), parallèlement au plan de l'interface dans lequel l'aiguille magnétique (3) du rhéomètre (30) est située, de deux aimants permanents (13) avec des axes de magnétisation perpendiculaires au plan de l'interface, les deux aimants (13) étant situés à une même distance (h) au-dessus du plan de l'interface, les aimants (13) ayant leurs polarités inversées l'une par rapport à l'autre, et dans lequel une distance entre les aimants (d) est maintenue constante.

13. Procédé d'actionnement de l'aiguille du rhéomètre interfacial à cisaillement à aiguille magnétique (30) selon la revendication 12, dans lequel le déplacement est effectué de manière oscillante.

14. Procédé de mesure d'une viscosité d'un film à l'aide du rhéomètre interfacial à cisaillement à aiguille magnétique (30), qui utilise le procédé d'actionnement de l'aiguille du rhéomètre (30) selon l'une des revendications 12 à 13, **caractérisé en ce qu'**il comprend :

- déplacer les deux aimants (13) de manière oscillante dans la direction longitudinale du canal (16) à une fréquence ω;
- obtenir la position des aimants ($p_i$) ;
- obtenir la position de l'aiguille magnétique ($p_a$) ;
- obtenir le déphasage ($\delta_{pp}$) et le rapport d'amplitude ($AR_{pp}$) entre la position des aimants ($p_i$) et la position de l'aiguille magnétique ($p_a$) ;
- obtenir, à partir d'une procédure de calibrage préalable, une constante élastique $k_i$ d'un puits de potentiel créé par les aimants (13) sur l'aiguille magnétique (3) ;
- calculer les modules dynamiques et de la viscosité interfaciale complexe du film (1) pour la fréquence ω à l'aide de la constante élastique $k_i$, le déphasage ($\delta_{pp}$) et le rapport d'amplitude ($AR_{pp}$).

15. Procédé de mesure de la viscosité du film à l'aide du rhéomètre interfacial à cisaillement à aiguille magnétique; selon la revendication 14, comprenant en outre l'exécution de balayages à la fréquence ω dans une gamme de fréquences et l'obtention des modules dynamiques et de la viscosité interfaciale complexe du film (1) pour la gamme de fréquences.

**Figure 1A.**

**Figure 1B.**

**Figure 2.**

**Figure 3.**

Figure 4.

Figure 5A.

Figure 5B.

Figure 5C.

Figure 5D.

Figure 6.

**Figure 7.**

**Figure 8A.**

Figure 8B.

Figure 9.

**Figure 10A.**

**Figure 10B.**

Figure 11A.

Figure 11B.

Figure 12.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BROOKS, CT et al.** An Interfacial Stress Rheometer to Study Transitions in Monolayers at the Air-Water Interface. *Langmuir,* 11 March 1999, vol. 15 (7), 2450-2459
- **REYNAERT, S et al.** Analysis of the Magnetic Rod Interfacial Stress Rheometer. *Journal of Rheology,* 2008, vol. 52 (1), 261-285
- **VERWIJLEN, T et al.** Study of the Flow Field in the Magnetic Rod Interfacial Stress Rheometer. *Langmuir,* 22 June 2011, vol. 27 (15), 9345-9358
- **TAJUELO, J et al.** Magnetic microwire probes for the magnetic rod interfacial stress rheometer. *Langmuir,* 15 December 2014, vol. 31 (4), 1410-1420
- **KRAGEL J et al.** Interfacial Shear Rheology of Protein-surfactant Layers. *Advances in colloid and interface science,* December 2008, vol. 144 (1-2), 38-53